# EUROPÄISCHE PATENTSCHRIFT

(11) **EP 4 104 154 B1**
(45) Veröffentlichungstag und Bekanntmachung des Hinweises auf die Patenterteilung: **01.07.2026**
(21) Anmeldenummer: 21705164.8
(22) Anmeldetag: 11.02.2021
(51) Int. Cl.: G08B 17/00, G08B 17/10, G08B 29/18, H04W 4/70, H04W 84/18, H04W 88/16

(54) **VERFAHREN ZUR FRÜHERKENNUNG EINES WALDBRANDES UND WALDBRANDFRÜHERKENNUNGSSYSTEM**
FOREST FIRE EARLY DETECTION METHOD AND FOREST FIRE EARLY DETECTION SYSTEM
PROCÉDÉ DE DÉTECTION PRÉCOCE D'INCENDIE DE FORÊT ET SYSTÈME DE DÉTECTION PRÉCOCE D'INCENDIE DE FORÊT

(30) Priorität: 11.02.2020 DE 102020103418
(43) Veröffentlichungstag der Anmeldung: 21.12.2022
(73) Patentinhaber: Dryad Networks GmbH, 16225 Eberswalde (DE)
(72) Erfinder: BÖNIG, Marco, 44137 Dortmund (DE); BRINKSCHULTE, Carsten, 14052 Berlin (DE)
(74) Vertreter: Dantz, Dirk
(86) Internationale Anmeldenummer: PCT/EP2021/053350
(87) Internationale Veröffentlichungsnummer: WO 2021/160749

(56) Entgegenhaltungen:
- WO-A1-2019/048603
- WO-A1-2019/048603
- DE-B3- 102016 000 661
- DE-B3- 102016 000 661
- RU-C1- 2 617 138
- RU-C1- 2 617 138
- US-B2- 7 154 095
- US-B2- 7 154 095

## Beschreibung

Die Erfindung betrifft ein Verfahren zur Früherkennung eines Waldbrandes mithilfe eines Endgerätes mit einer Sensoreinheit, wobei die Sensoreinheit die Signalerfassung in einem ersten Signalerfassungsmodus und in einem zweiten Signalerfassungsmodus durchführt sowie ein Waldbrandfrüherkennungssystem zur Durchführung des Verfahrens.

### Stand der Technik

Systeme zur Früherkennung von Waldbränden sind bekannt. Dazu wird das zu überwachende Areal mittels optischer Sensoren überwacht, die bei einem Waldbrand entstehenden Rauchsäulen erkennen können. Diese Sensoren sind z.B. drehbare Kameras, die jedoch den Nachteil aufweisen, dass sie in der Nacht weniger effektiv sind und für Fehlerkennungen, z.B. bei Staubwolken in Folge landwirtschaftlicher Aktivitäten, anfällig sind. Zudem können optische Systeme den Waldbrand in der Regel erst erkennen, wenn der Waldbrand bereits fortgeschritten ist und die Rauchsäulen über größere Distanzen sichtbar werden. Eine Überwachung mittels einer in einem Satelliten verbauter IR-Kamera aus einem hohen Orbit weist den Nachteil auf, dass die Auflösung der Kameras über die großen Distanzen eine Erkennung von Waldbränden in der Frühphase verhindert. Ein Satellit ist außerdem teuer in Anschaffung und Unterhalt, insbesondere beim Start des Satelliten. Eine Überwachung durch Minisatelliten in einem niedrigen Orbit weist den Nachteil auf, dass die Satelliten nicht geostationär sind, für einen Umlauf also eine gewisse Zeit benötigen, in der das Areal nicht überwacht wird. Für eine engmaschige Überwachung wird eine große Mehrzahl von Satelliten benötigt, deren Start ebenfalls kostenintensiv ist. Eine Überwachung durch Satelliten ist außerdem während des Starts mit einem hohen Kohlendioxid-Ausstoß verbunden.

Sinnvoller ist eine Überwachung des Areals mittels einer Mehrzahl preiswerter, in Serie herstellbarer Sensoren, die mittels optischer Rauchdetektion und/oder Gasdetektion arbeiten. Die Sensoren werden im Areal verteilt angeordnet und liefern über Funkverbindung Daten an eine Basisstation.

Die RU 2 617 138 C1 zeigt beispielsweise ein Verfahren zur Erkennung eines Waldbrandes mit einer Sensoreinheit mit zwei Signalerfassungsmodi, wobei der erste Signalerfassungsmodus dazu dient die Sensoreinheit einzuschalten und der zweite Signalerfassungsmodus dazu dient Signale zu erfassen, die eine Waldbranderkennung gestatten.

Ein derartiges System zur Früherkennung von Waldbränden wird in der Schrift US 2008/0309502 A1 vorgestellt. Dabei wird liefert ein Sensor bei Feueralarm Informationen an ein nahegelegenes Control-Terminal, das dann einen Alarm mittels eines Langreichweiten-Funkfrequenz-Signals auslöst.

Dieses System weist den Nachteil auf, dass das Control-Terminal den Alarm auslöst und dazu über eine leistungsfähige RF-Einheit verfügen muss. Die Sensoren benötigen eine GPS-Einheit, die ständig ein Signal an das Control-Terminal sendet, der Stromverbrauch der Sensoren ist daher hoch, die Lebensdauer der Energiequellen (Batterien) der Sensoren begrenzt.

Es ist daher Aufgabe der vorliegenden Erfindung, ein Waldbrandfrüherkennungssystem sowie ein Verfahren zur Früherkennung eines Waldbrandes bereitzustellen, die zuverlässig arbeiten, beliebig erweiterbar, sowie kostengünstig in Installation und Unterhalt sind.

Die Aufgabe wird mittels des Verfahrens zur Früherkennung eines Waldbrandes gemäß Anspruch 1 gelöst. Weitere vorteilhafte Ausführungen der Erfindung sind in den Unteransprüchen dargelegt.

Das erfindungsgemäße Verfahren zur Früherkennung eines Waldbrandes wird mittels eines Endgerätes durchgeführt, das eine Sensoreinheit aufweist. Mittels der Sensoreinheit werden Signale in mindestens zwei unterschiedlichen Signalmodi erfasst. Dazu wird eine erste Signalerfassung in einem ersten Signalerfassungsmodus sowie eine zweite Signalerfassung in einem zweiten Signalerfassungsmodus durchgeführt.

Hierbei wird eine Mitteilung vom Endgerät an ein erstes Gateway versandt, wenn die aus den im zweiten Signalerfassungsmodus erfassten zweiten Signalen mit Hilfe der Mikroprozessoreinheit analysierten Daten einen zweiten Schwellwert überschreiten, und wenn die Auswertung der ersten Signalerfassung und der zweiten Signalerfassung einen Brand detektiert hat, und wobei die Mitteilung in der Sensoreinheit generiert wird, wobei die bei der Durchführung der ersten Signalerfassung erfassten Signale mit Hilfe der Mikroprozessoreinheit analysiert werden und die Durchführung einer zweiten Signalerfassung in einem zweiten Signalerfassungsmodus der Sensoreinheit ereignisgesteuert gestartet wird, wobei das Ereignis, das die zweite Signalerfassung in einem zweiten Signalerfassungsmodus startet, auf den erfassten Signalen der ersten Signalerfassung und/oder deren Analyse beruht

Die beiden Signalerfassungsmodi können sich aufgrund der Zeitdauer unterscheiden, in der die Erfassung erfolgt. So kann der erste Signalerfassungsmodus eine kürzere Erfassungszeit aufweisen als der zweite Signalerfassungsmodus, oder umgekehrt. Möglich ist auch eine physikalische Unterscheidbarkeit der beiden Signalerfassungsmodi: Im ersten Signalerfassungsmodus kann z.B. Rauch detektiert werden, im zweiten Signalerfassungsmodus Wärme mittels Infrarot-Detektion. Wichtig im Sinne der Erfindung ist der Unterschied der Erfassung des Signals mittels unterschiedlicher Signalerfassungsmodi. Damit werden Zuverlässigkeit und Genauigkeit des erfindungsgemäßen Verfahrens erhöht, weil zwei unabhängige Erfassungsmodi zur Früherkennung eines Waldbrandes herangezogen werden.

In einer weiteren Ausführung der Erfindung werden die bei der Durchführung der ersten Signalerfassung erfassten Signale analysiert. Die Signale, die mittels des ersten Signalerfassungsmodus erfasst werden, werden dahingehend analysiert und geprüft, ob ein Ereignis - ein Brand - detektiert ist.

In einer Weiterbildung der Erfindung wird die Durchführung einer ersten Signalerfassung in einem ersten Signalerfassungsmodus der Sensoreinheit in einem Zeitintervall wiederholt. Das Zeitintervall ist durch einen Nutzer einstellbar. So kann z.B. eine Signalerfassung pro Sekunde erfolgen, andere Zeitintervalle sind möglich. Damit kann die zeitliche Auflösung der Signalerfassung erhöht bzw. vermindert werden.

In einer vorteilhaften Gestaltung der Erfindung kann ein solches Ereignis der Ausfall einer Systemkomponente des Endgerätes sein, der eine Signalerfassung im ersten Modus verhindert. Weiterhin kann eine Signalerfassung im zweiten Signalerfassungsmodus erfolgen, falls mittels der ersten Signalerfassung ein Ereignis (Brand) detektiert wurde. Die Signale der ersten Signalerfassung werden so überprüft, das Verfahren arbeitet zuverlässiger als bei Signalerfassung in nur einem Signalerfassungsmodus.

In einer Weiterbildung der Erfindung werden die Signale, die mittels des ersten Signalerfassungsmodus erfasst, werden dahingehend analysiert und geprüft, ob ein Ereignis - ein Brand - detektiert ist. Falls dies der Fall ist, erfolgt eine Signalerfassung im zweiten Signalerfassungsmodus. Die Signale der ersten Signalerfassung werden so überprüft, das Verfahren arbeitet zuverlässiger als bei Signalerfassung in nur einem Signalerfassungsmodus.

In einer weiteren Ausbildung der Erfindung ist das Ereignis, das die zweite Signalerfassung in einem zweiten Signalerfassungsmodus startet, das Überschreiten eines Schwellwertes der analysierten Daten aus der in der ersten Signalerfassung erfassten Signale. Der Schwellwert kann z.B. die Konzentration eines Gases sein, das in dem Areal, das mittels des erfindungsgemäßen Verfahrens überwacht wird, natürlicherweise vorkommt. Wird dieses Gas mittels einer ersten Signalerfassung detektiert, ist eine Überprüfung sinnvoll, ob eine bestimmte, vom Nutzer festzulegende Konzentration (Schwellwert) überschritten wird. Diese Überprüfung erfolgt mit der zweiten Signalerfassung in einem zweiten Signalerfassungsmodus. Alternativ zum Überschreiten des Schwellwertes kann auch die Erkennung eines Musters oder andere Auffälligkeiten der erfassten und/oder analysierten Daten als auslösendes Ereignis verwendet werden.

In einer Weiterbildung der Erfindung werden die erfassten zweiten Signale der zweiten Signalerfassung ausgewertet. Die Signale, die mittels des zweiten Signalerfassungsmodus erfasst werden, werden dahingehend analysiert und geprüft, ob ein Ereignis - ein Brand - detektiert ist.

Entsprechend der Erfindung wird eine Mitteilung dann versendet, wenn die aus den im zweiten Signalerfassungsmodus erfassten zweiten Signalen mit Hilfe der Mikroprozessoreinheit analysierten Daten einen zweiten Schwellwert überschreiten und die Auswertung der ersten Signalerfassung und der zweiten Signalerfassung einen Brand detektiert hat. Die Mitteilung wird als Datenpaket drahtlos oder drahtgebunden an ein erstes Gateway (Knotenpunkt) gesendet.

Entsprechend der Erfindung wird das Mitteilungssignal in der Sensoreinheit generiert, wenn die aus den erfassten zweiten Signalen und/oder aus diesen analysierten Daten einen zweiten Schwellwert überschreiten. Der Schwellwert kann z.B. die Konzentration eines Gases sein, das in dem Areal, das mittels des erfindungsgemäßen Verfahrens überwacht wird, beispielsweise natürlichen Ursprungs ist oder aus anderen Quellen vorkommt. Wird dieses Gas mittels einer zweiten Signalerfassung detektiert, wird die Mitteilung generiert und an ein erstes Gateway weitergeleitet.

In einer Weiterbildung der Erfindung umfasst der zweite Signalerfassungsmodus eine Gasanalyse. Die Gasanalyse kann mittels geeigneter Gasdetektoren, z.B. katalytischen Gasdetektoren, Halbleitergasdetektoren oder elektrochemischen Gasdetektoren erfolgen. Zusätzlich kann eine quantitative Analyse erfolgen.

In einer weiteren Ausführung der Erfindung beruht der erste Signalerfassungsmodus auf einem anderen physikalischen Prinzip als der zweite Signalerfassungsmodus. Der erste Signalerfassungsmodus ist üblicherweise als Vor- bzw. Grobanalyse ausgelegt. Dazu kann ein einfaches, erprobtes und preiswertes Prinzip angewandt werden, z.B. eine Rauchdetektion mittels Infrarot-LED. Der zweite Signalerfassungsmodus dient zur Erhöhung der Genauigkeit und ggf. quantitativen Analyse. Dazu werden üblicherweise andere Prinzipien angewandt, z.B. elektrische.

In einer weiteren Ausbildung der Erfindung beruht der erste Signalerfassungsmodus auf einer optischen Rauchdetektion. In der optischen Kammer des Rauchmelders befinden sich eine Infrarot-Leuchtdiode und ein lichtempfindlicher Sensor, eine sogenannte Photodiode. Die Infrarot-LED sendet kontinuierlich einen Prüf-Lichtstrahl aus, der für das menschliche Auge unsichtbar und so ausgerichtet ist, dass er nicht direkt auf die lichtempfindliche Photodiode trifft. Sind Rauchpartikel in der Luft und dringen diese in die optische Kammer des Endgerätes ein, wird der ausgesandte Infrarot-Lichtstrahl der LED durch die Rauchpartikel gestreut und reflektiert. Ein Teil dieses gestreuten Infrarot-Lichts fällt auch auf die lichtempfindliche Photodiode.

Die Aufgabe wird weiterhin mittels des erfindungsgemäßen Waldbrandfrüherkennungssystem gemäß Anspruch 7 gelöst.

Das erfindungsgemäße Waldbrandfrüherkennungssystem weist ein ein Gateway, eine Mikroprozessoreinheit und ein Endgerät mit einer Sensoreinheit auf. Die Sensoreinheit weist einen Sensor auf, der in einem ersten Signalerfassungsmodus und einem zweiten Signalerfassungsmodus betreibbar ist. Die Mikroprozessoreinheit ist dafür geeignet und dafür vorgesehen, die durch die Sensoreinheit erfassten Signale auszuwerten, wobei der zweite Sensormodus basierend auf den erfassten Signalen der ersten Signalerfassung und/oder deren Analyse ereignisgesteuert startbar ist

Die beiden Signalerfassungsmodi können sich aufgrund der Zeitdauer unterscheiden, in der die Erfassung erfolgt. So kann der erste Signalerfassungsmodus eine kürzere Erfassungszeit aufweisen als der zweite Signalerfassungsmodus, oder umgekehrt. Möglich ist auch eine physikalische Unterscheidbarkeit der beiden Signalerfassungsmodi: Im ersten Signalerfassungsmodus kann z.B. Rauch detektiert werden, im zweiten Signalerfassungsmodus Wärme mittels Infrarot-Detektion. Wichtig im Sinne der Erfindung ist der Unterschied der Erfassung des Signals mittels unterschiedlicher Signalerfassungsmodi. Damit werden Zuverlässigkeit und Genauigkeit des erfindungsgemäßen Verfahrens erhöht, weil zwei unabhängige Erfassungsmodi zur Früherkennung eines Waldbrandes herangezogen werden.

In einer Weiterbildung der Erfindung ist der erste Signalerfassungsmodus vom zweiten Signalerfassungsmodus verschieden. Der erste Signalerfassungsmodus ist üblicherweise als Vor- bzw. Grobanalyse ausgelegt. Dazu kann ein einfaches, erprobtes und preiswertes Prinzip angewandt werden, z.B. eine Rauchdetektion mittels Infrarot-LED. Der zweite Signalerfassungsmodus dient zur Erhöhung der Genauigkeit und ggf. quantitativen Analyse. Dazu werden üblicherweise andere Prinzipien angewandt, z.B. elektrische.

In einer weiteren Ausführung der Erfindung umfasst das Endgerät eine Auswerteeinheit, die dafür geeignet und dafür vorgesehen ist, die erfassten Signale auszuwerten und die Signalerfassung zu steuern. Die Signale, die mittels des ersten Signalerfassungsmodus und des zweiten Signalerfassungsmodus erfasst werden, werden dahingehend analysiert und geprüft, ob ein Ereignis - ein Brand - detektiert ist. Gleichzeitig steuert die Auswerteeinheit Dauer und Zeitpunkt der beiden Signalerfassungsmodi.

In einer weiteren Gestaltung der Erfindung sind der erste Signalerfassungsmodus und der zweite Signalerfassungsmodus getrennt ansteuerbar. Falls mittels der ersten Signalerfassung ein Ereignis (Brand) detektiert wurde, erfolgt eine Signalerfassung im zweiten Signalerfassungsmodus. Die Signale der ersten Signalerfassung werden so überprüft, das Verfahren arbeitet zuverlässiger als bei Signalerfassung in nur einem Signalerfassungsmodus.

In einer weiteren Ausbildung der Erfindung ist der erste Signalerfassungsmodus periodisch wiederholbar und/oder der zweite Signalerfassungsmodus aktivierbar. Die Signale, die mittels des ersten Signalerfassungsmodus erfasst werden, werden dahingehend analysiert und geprüft, ob ein Ereignis - ein Brand - detektiert ist. Falls dies der Fall ist, erfolgt eine Signalerfassung im zweiten Signalerfassungsmodus. Die Signale der ersten Signalerfassung werden so überprüft, das Verfahren arbeitet zuverlässiger als bei Signalerfassung in nur einem Signalerfassungsmodus. Die Wiederholung des ersten Signalerfassungsmodus erhöht die Genauigkeit der Erfassung.

In einer weiteren Ausgestaltung der Erfindung weist die Sensoreinheit ein erstes Sensorelement auf. Der erste Signalerfassungsmodus ist üblicherweise als Vor- bzw. Grobanalyse ausgelegt. Dazu kann ein einfaches, erprobtes und preiswertes Prinzip des ersten Sensorelements angewandt werden.

In einer Weiterbildung der Erfindung ist der erste Sensor ein Gassensor. Ein Gassensor detektiert die Anwesenheit eines definierten Gases, wobei die Konzentration des Gases einen Schwellwert überschreiten muss, um detektiert zu werden. Alternativ können anstelle des Schwellwertes auch Muster oder andere Auffälligkeiten der detektierten Signale erfasst werden.

In einer weiteren Ausführung der Erfindung beruht das Messprinzip des ersten Sensorelements auf einer elektrischen Signalerfassung oder auf einer optischen Signalerfassung. Das erste Sensorelement ist üblicherweise als Vor- bzw. Grobanalyse ausgelegt. Dazu kann ein einfaches, erprobtes und preiswertes Prinzip angewandt werden, z.B. eine Rauchdetektion mittels Infrarot-LED wie in einem handelsüblichen Rauchmelder. Zur Anwendung kann auch eine optische Methode, wie z.B. eine Kamera, kommen.

In einer weiteren Ausgestaltung der Erfindung weist die Sensoreinheit ein zweites Sensorelement auf. Das zweite Sensorelement dient zur Erhöhung der Genauigkeit und ggf. quantitativen Analyse. Dazu werden üblicherweise andere Prinzipien angewandt, z.B. elektrische. Die Signale des ersten Sensorelements werden so überprüft, das Verfahren arbeitet zuverlässiger als bei Signalerfassung in nur einem Sensorelement.

In einer weiteren Gestaltung der Erfindung ist das Endgerät für die Off-Grid-Nutzung vorgesehen und weist eine autarke Stromversorgung auf. Um das Endgerät auch in unwirtlichen und insbesondere ruralen Gegenden fernab von Energieversorgung installieren und betreiben zu können, ist das Endgerät mit einer autarken Energieversorgung ausgestattet. Die Energieversorgung ist im einfachsten Fall eine Batterie, die auch wiederaufladbar gestaltet sein kann. Möglich ist aber auch der Einsatz von Kondensatoren.

In einer weiteren Ausbildung der Erfindung weist die autarke Stromversorgung eine Energiekonversionsvorrichtung und/oder einen Energiespeicher auf. Der Einsatz von z.B. Solarzellen bietet eine hohe Lebensdauer für das Endgerät. Dazu wird Sonneneinstrahlung in elektrische Energie konvertiert, die in einem Akku oder Kondensator gespeichert wird.

In einer vorteilhaften Gestaltung der Erfindung weist das Endgerät eine Kommunikationseinheit auf, die dafür geeignet ist, LPWAN-Mitteilungen zu versenden und zu empfangen. Das Endgerät wird in ein LPWAN integriert. LPWAN beschreibt eine Klasse von Netzwerkprotokollen zur Verbindung von Niedrigenergiegeräten wie batteriebetriebene Sensoren mit einem Netzwerkserver. Das Protokoll ist so ausgelegt, dass eine große Reichweite und ein niedriger Energieverbrauch der Endgeräte bei niedrigen Betriebskosten erreicht werden können.

Ausführungsbeispiele des erfindungsgemäßen Verfahrens zur Früherkennung eines Waldbrandes und des erfindungsgemäßen Waldbrandfrüherkennungssystems sind in den Zeichnungen schematisch vereinfacht dargestellt und werden in der nachfolgenden Beschreibung näher erläutert.

Es zeigen:
- Fig. 1:: Grundprinzip des Verfahrens zur Früherkennung eines Waldbrandes
- Fig. 2:: Weiterbildung des Verfahrens zur Früherkennung eines Waldbrandes
- Fig. 3:: Weitere Ausgestaltung des Verfahrens zur Früherkennung eines Waldbrandes
- Fig. 4 a:: Endgerät mit einem Sensor

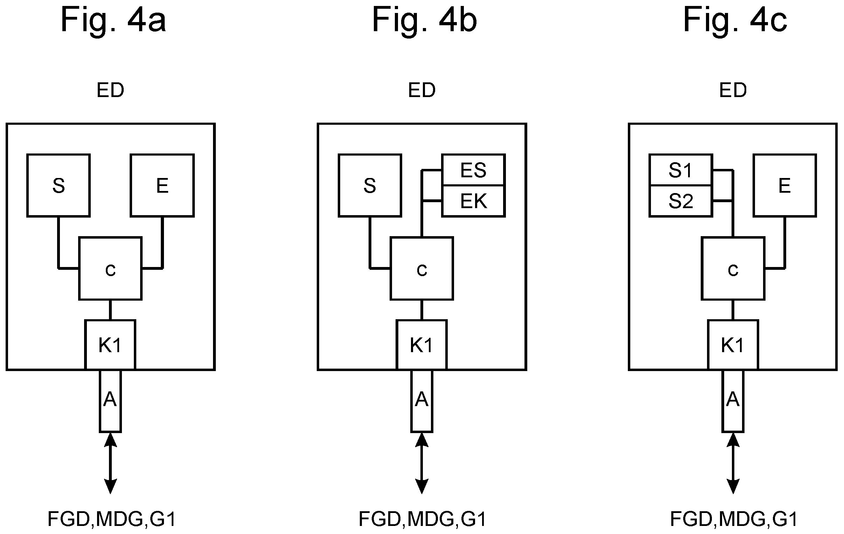

- Fig. 4 b:: Endgerät mit einem Sensor und einer Energiekonversionsvorrichtung
- Fig. 4 c:: Endgerät mit zwei Sensoren

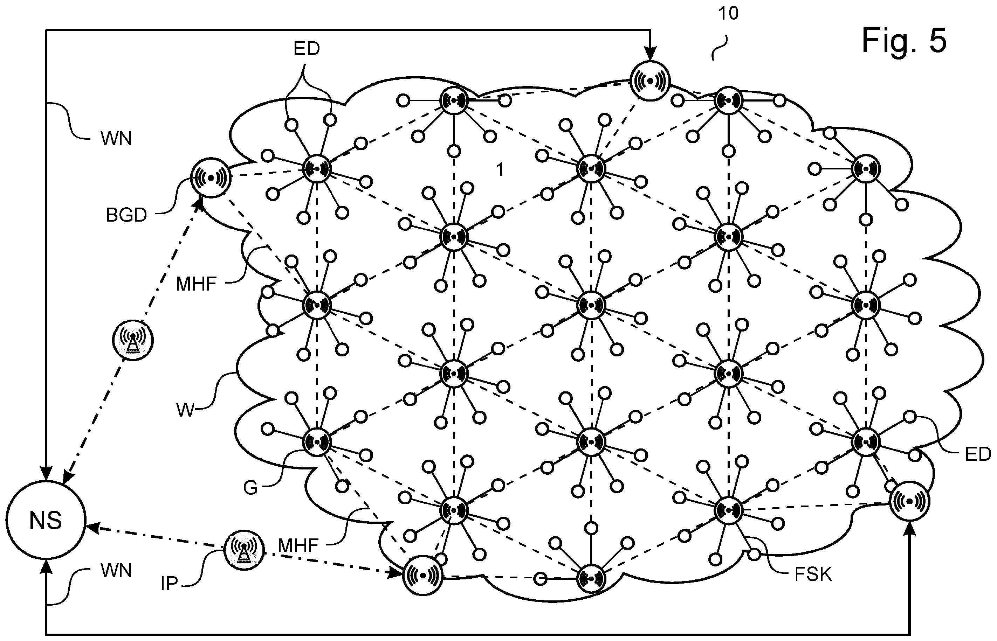

- Fig. 5:: Waldbrandfrüherkennungssystemnetzwerk

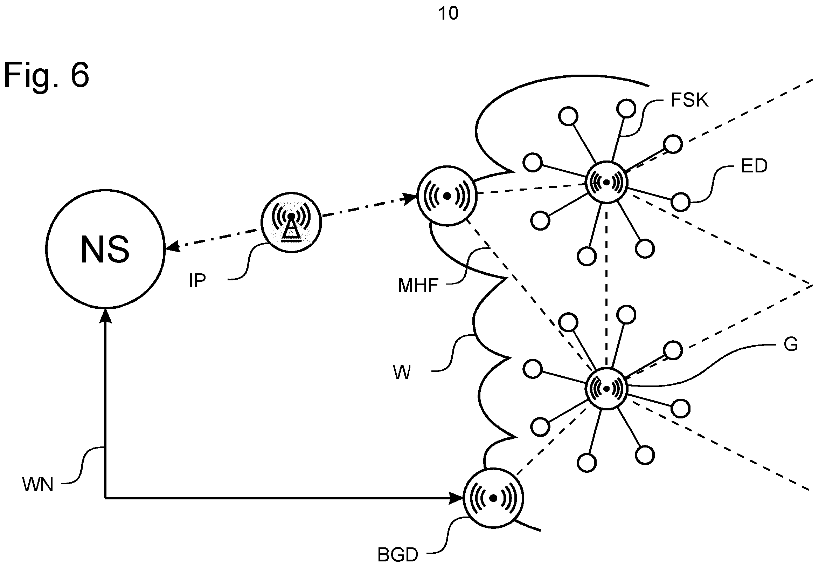

- Fig. 6:: Detailansicht des Waldbrandfrüherkennungssystemnetzwerks

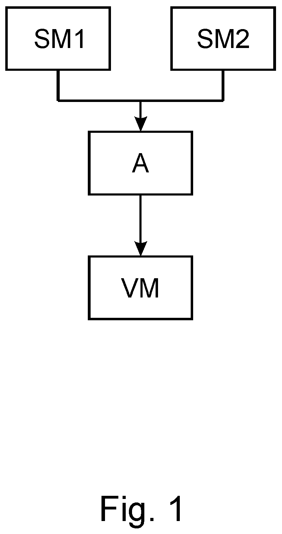

Fig. 1 zeigt ein Ausführungsbeispiel des erfindungsgemäßen Verfahrens. Im ersten Verfahrensschritt erfolgt eine erste Erfassung sowie eine zweite Erfassung von Signalen durch eine Sensoreinheit S eines Sensors ED in zwei unterschiedlichen Sensormodi SM1, SM2. In diesem Ausführungsbeispiel erfolgt die Erfassung der Signale in zwei unterschiedlichen Signalmodi SM1, SM2 zeitgleich. Eine weitere Möglichkeit ist die Erfassung in komplementären Zeiträumen. In einem ersten Zeitraum wird die Erfassung im ersten Signalmodus SM1 durchgeführt, während eine Erfassung im zweiten Signalmodus SM2 nicht durchgeführt wird, sowie umgekehrt. Die Erfassung in den Sensormodi SM1, SM2 erfolgt derart kontinuierlich oder in einem Zeitintervall, dass die Erfassung ständig wiederholt wird. Dadurch wird die Genauigkeit und Zuverlässigkeit durch Redundanz der Erfassung erhöht, indem zwei unabhängige Sensormodi SM1, SM2 zur Erfassung verwendet werden. Die Signale, die von der Sensoreinheit S erfasst werden, werden in der Mikroprozessoreinheit C des Endgerätes ED analysiert. Wird aufgrund der Analyse A der Daten ein Brand detektiert, wird eine Mitteilung generiert und versendet VM. Das Verfahren wird dann wieder neu gestartet.

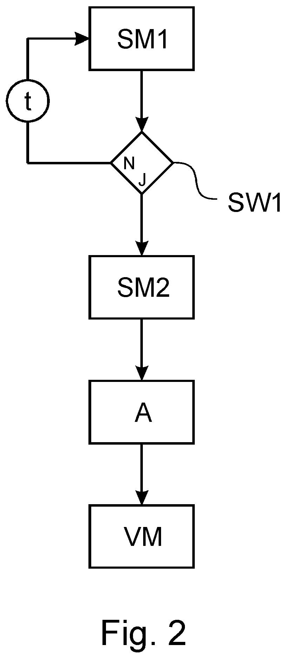

Ein weiteres Ausführungsbeispiel des erfindungsgemäßen Verfahrens zeigt Fig. 2. Hier werden die Sensormodi SM1, SM2 nicht parallel betrieben, die Sensoreinheit S arbeitet zunächst im ersten Sensormodus SM1. Die Sensoreinheit S detektiert mittels Photodiode das durch Rauch gestreute Streulicht einer Infrarot-LED und arbeitet im ersten Sensormodus SM1 wie ein herkömmlicher Rauchmelder. Die Erfassung im ersten Sensormodus SM1 erfolgt kontinuierlich und wird in gewissen Zeitabständen t wiederholt. Falls mittels des ersten Sensormodus SM1 ein erstes Ereignis SW1 erfasst wird - also Rauch detektiert bzw. ein Schwellwert erreicht oder überschritten wird -, steuert die Auswerteeinheit C die Sensoreinheit S derart an, dass die Sensoreinheit S Signale im zweiten Sensormodus SM2 erfasst. Die Sensoreinheit S weist dazu zwei Sensorelemente S1, S2 auf, deren Messprinzip sich unterscheidet. Während das erste Sensorelement S1 ein optischer Rauchmelder ist, ist das zweite Sensorelement S2 ein Detektor, der Gas mittels elektrischer und/oder elektrochemischer Methoden detektiert, z.B. ein Halbleitergasdetektor. Genauigkeit und Zuverlässigkeit der Erfassung werden so ebenfalls erhöht. Die Signale, die von der Sensoreinheit S erfasst werden, werden in der Mikroprozessoreinheit C des Endgerätes ED analysiert A. Wird aufgrund der Analyse sowohl der im ersten und zweiten Sensormodus SM1, SM2 erfassten Daten ein Brand detektiert, wird eine Mitteilung generiert und versendet VM.

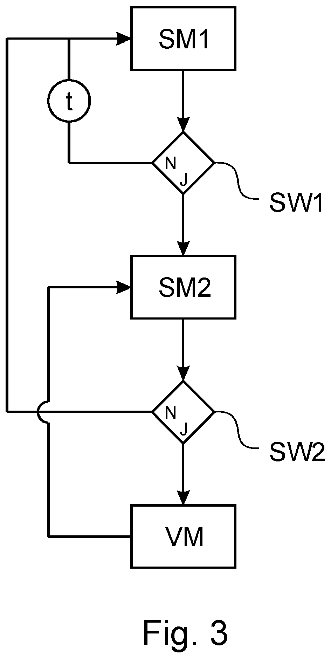

Fig. 3 zeigt ein weiteres Ausführungsbeispiel des erfindungsgemäßen Verfahrens. Hier werden die Sensormodi SM1, SM2 ebenfalls nicht parallel betrieben, die Sensoreinheit S arbeitet zunächst im ersten Sensormodus SM1. Die Sensoreinheit S detektiert ebenfalls kontinuierlich mittels Photodiode das durch Rauch gestreute Streulicht einer Infrarot-LED und erfasst Sensordaten im ersten Sensormodus SM1. Falls mittels des ersten Sensormodus SM1 ein erstes Ereignis SW1 erfasst wird - also Rauch detektiert wird -, steuert die Auswerteeinheit C die Sensoreinheit S derart an, dass die Sensoreinheit S Signale im zweiten Sensormodus SM2 erfasst. Die Sensoreinheit S weist dazu zwei Sensorelemente S1, S2 auf, deren Messprinzip sich unterscheidet.

Die Signale, die von der Sensoreinheit S erfasst werden, werden in der Mikroprozessoreinheit C des Endgerätes ED analysiert. Wird aufgrund der Analyse der Daten, die im Sensormodus SM2 erfasst wurden, ein Brand detektiert beispielsweise durch überschreiten eines Schwellwertes SW2 - also ein zweites Ereignis erfasst, wird eine Mitteilung generiert und versendet. Die Sensoreinheit S erfasst dann weiter Daten im zweiten Sensormodus SM2 so lange, bis kein Ereignis (Brand) detektiert wird. Eine Mitteilung wird ebenfalls so lange generiert und versendet VM, wie ein Ereignis erfasst wird. Wird allerdings aufgrund der Analyse der Daten, die im Sensormodus SM2 erfasst wurden, kein Brand mehr detektiert, erfasst die Sensoreinheit S Sensordaten im ersten Sensormodus SM1.

Drei Varianten eines Endgerätes (ED) zur Erkennung eines Waldbrandes zeigt Fig. 4. Das Endgerät ED ist ein Sensor zur Erkennung eines Waldbrandes. Um das Endgerät ED auch in unwirtlichen und insbesondere ruralen Gegenden fernab von Energieversorgung installieren und betreiben zu können, ist der Sensor ED mit einer autarken Energieversorgung E ausgestattet. Die Energieversorgung E ist im einfachsten Fall eine Batterie, die auch wiederaufladbar gestaltet sein kann (Fig. 4 a). Möglich ist aber auch der Einsatz von Kondensatoren (Fig. 4 c), insbesondere Superkondensatoren. Etwas aufwendiger und kostenintensiver, aber eine sehr lange Lebensdauer des Sensors ED bietende Energieversorgung E ist der Einsatz von Solarzellen (Fig. 4 b). Neben der Energiekonversion EK durch die Solarzelle ist zusätzlich ein Speicher ES sowie eine Leistungselektronik im Sensor ED angeordnet. Außerdem weist ein Sensor ED die eigentliche Sensoreinheit S auf (Fig. 4 a, b), die z.B. mittels optischer und/oder elektronischer Verfahren einen Waldbrand erkennt. Die Sensoreinheit S kann auch zwei Sensorelemente S1, S2 ausgeführt sein (Fig. 4 c). Dabei unterscheiden sich die beiden Sensorelemente S1, S2 hinsichtlich des Messprinzips voneinander: In diesem Ausführungsbeispiel ist das erste Sensorelement S1 ein Gassensor, der mittels einer Photodiode das Streulicht einer Infrarot-LED registriert. Das zweite Sensorelement ist ein Halbleitergasdetektor.

Das Endgerät ED weist zur Analyse der von der Sensoreinheit S gelieferten Daten und zur Generierung einer Mitteilung eine Mikroprozessoreinheit C auf. Der Sensor ED weist zusätzlich die Kommunikationsschnittstelle K1 auf. Mittels der Kommunikationsschnittstelle K1 werden Mitteilungen des Endgerätes ED, insbesondere Messdaten, als Datenpaket drahtlos über die Antenne A mittels einer Single-Hop-Verbindung FSK über LoRa (Zirpenfrequenzspreizungsmodulation) oder Frequenzmodulation an ein Gateway G1, FGD, MDG versendet. Alle genannten Komponenten sind in einem Gehäuse zum Schutz vor Witterungseinflüssen angeordnet.

Ein Ausführungsbeispiel eines erfindungsgemäßen Waldbrandfrüherkennungssystems 10 zeigt Fig. 5. Das Waldbrandfrüherkennungssystem 10 weist ein Mesh-Gateway-Netzwerk 1 auf, das die Technologie eines LoRaWAN-Netzwerks 1 nutzt. Das LoRaWAN-Netzwerk 1 weist eine sternförmige Architektur auf, in der mittels Gateways Nachrichtenpakete zwischen den Sensoren ED und einem zentralen Internet-Netzwerk-Server NS ausgetauscht werden.

Das Waldbrandfrüherkennungssystem 10 weist eine Vielzahl von Sensoren ED auf, die über eine Single-Hop-Verbindung FSK mit Gateways G verbunden sind. Die Gateways G1 sind üblicherweise Frontend-Gateways FGD. Die Frontend-Gateways FGD sind untereinander verbunden sowie teilweise mit Grenz-Gateways G2. Ein Grenz-Gateway G2 kann auch mit einem Frontend-Gateways FGD zu einer Mesh-Gateway-Vorrichtung MDG in einem Gerät kombiniert sein. Die Grenz-Gateways G2 sind mit dem Internet-Netzwerk-Server NS verbunden, entweder über eine drahtgebundene Verbindung WN oder über eine drahtlose Verbindung mittels Internetprotokoll IP.

Die Frontend-Gateways FGD und die Grenz-Gateways G2 sind untereinander über ein vermaschtes Multi-Hop-Netzwerk MHF verbunden, so dass ein Frontend-Gateway FGD keine direkte Verbindung zum Internet-Netzwerk-Server NS benötigt. Dadurch wird eine Reichweitenverlängerung von LoRaWAN-Netzwerken erreicht, indem ein Multi-Hop-Netzwerk mittels Frontend-Gateways FGD zwischenschaltet ist und somit eine vollständige Komptabilität zur LoRaWAN-Spezifikation erreicht.

Eine mögliche Implementierung eines erfindungsgemäßen Waldbrandfrüherkennungssystems 10 zeigt Fig. 6. Das Waldbrandfrüherkennungssystem 10 weist eine Mehrzahl von Sensoren ED auf, wobei jeweils acht Sensoren ED über eine Single-Hop-Verbindung FSK mit einem Gateway G1 verbunden sind. Die Gateways G1 sind Frontend-Gateways FGD. Die Frontend-Gateways FGD sind untereinander sowie mit Grenz-Gateways G2 verbunden. Die Grenz-Gateways G2 sind mit dem Internet-Netzwerk-Server NS verbunden, entweder über eine drahtgebundene Verbindung WN oder über eine drahtlose Verbindung mittels Internetprotokoll IP.

### BEZUGSZEICHENLISTE

- 1: Mesh-Gateway-Netzwerk
- 10: Waldbrandfrüherkennungssystem
- ED, EDn1: Endgeräte/Sensoren
- G1: Gateway
- G2: Grenz-Gateway
- NS: Internet-Netzwerk-Server
- IP: Internetprotokoll
- FGD, FGDn: Front-End-Gateways
- MHF: Multi-Hop-Funknetzwerk
- MDG, MDGn: Mesh-Gateways
- FSK: FSK-Modulation
- WN: Drahtgebundene Verbindung
- W: Wald
- S: Sensor
- S1, S2: Sensorelement
- E: Energieversorgung
- ES: Energiespeicher
- EK: Energiekonversion
- K1: Kommunikationsschnittstelle Endgerät
- C: Mikroprozessoreinheit
- SM1: Sensormode 1
- SM2: Sensormode 2
- VM: Versand Mitteilung
- A: Antenne
- SW1: 1. Schwellwert
- SW2: 2. Schwellwert

## Patentansprüche

1. Verfahren zur Früherkennung eines Waldbrandes mithilfe eines Endgeräts (ED) mit einer Sensoreinheit (S),
**dadurch gekennzeichnet, dass**
die Sensoreinheit (S) eine erste Signalerfassung in einem ersten Signalerfassungsmodus (SM1) und eine zweite Signalerfassung in einem zweiten Signalerfassungsmodus (SM2) durchführt, wobei eine Mitteilung vom Endgerät (ED) an ein erstes Gateway (G1) versandt wird, wenn die aus den im zweiten Signalerfassungsmodus erfassten zweiten Signalen (SM2) mit Hilfe einer Mikroprozessoreinheit (C) analysierten Daten einen zweiten Schwellwert (SW2) überschreiten, und wenn die Auswertung der ersten Signalerfassung und der zweiten Signalerfassung einen Brand detektiert hat, und wobei
die Mitteilung in der Sensoreinheit (S) generiert wird,
wobei die bei der Durchführung der ersten Signalerfassung (SM1) erfassten Signale mit Hilfe der Mikroprozessoreinheit (C) analysiert werden und die Durchführung der zweiten Signalerfassung in dem zweiten Signalerfassungsmodus (SM2) der Sensoreinheit (S) ereignisgesteuert gestartet wird,
wobei das Ereignis, das die zweite Signalerfassung in dem zweiten Signalerfassungsmodus (SM2) startet, auf den erfassten Signalen der ersten Signalerfassung (SM1) und/oder deren Analyse beruht.

2. Verfahren zur Früherkennung eines Waldbrandes nach Anspruch 1
**dadurch gekennzeichnet, dass**
die Durchführung der ersten Signalerfassung in dem ersten Signalerfassungsmodus (SM1) der Sensoreinheit (S) in einem Zeitintervall wiederholt wird.

3. Verfahren zur Früherkennung eines Waldbrandes nach Anspruch 1 oder 2
**dadurch gekennzeichnet, dass**
das Ereignis, das die zweite Signalerfassung in dem zweiten Signalerfassungsmodus (SM2) startet, das Überschreiten eines Schwellwertes (SW1) der analysierten Daten aus der in der ersten Signalerfassung (SM1) erfassten Signale ist, wobei die erfassten zweiten Signale der zweiten Signalerfassung (SM2) ausgewertet werden.

4. Verfahren zur Früherkennung eines Waldbrandes nach einem oder mehreren der vorhergehenden Ansprüche
**dadurch gekennzeichnet, dass**
der zweite Signalerfassungsmodus (SM2) eine Gasanalyse umfasst.

5. Verfahren zur Früherkennung eines Waldbrandes nach einem oder mehreren der vorhergehenden Ansprüche
**dadurch gekennzeichnet, dass**
der erste Signalerfassungsmodus (SM1) auf einem anderen physikalischen Prinzip beruht als der zweite Signalerfassungsmodus (SM2).

6. Verfahren zur Früherkennung eines Waldbrandes nach Anspruch 5,
**dadurch gekennzeichnet, dass**
der erste Signalerfassungsmodus (SM1) auf einer optischen Rauchdetektion beruht.

7. Waldbrandfrüherkennungssystem (10) zur Durchführung eines Verfahrens nach einem der vorhergehenden Ansprüche mit einem Gateway (G1, G2), einer Mikroprozessoreinheit (C) und einem Endgerät (ED), wobei das Endgerät (ED) eine Sensoreinheit (S) aufweist,
**dadurch gekennzeichnet, dass**
die Sensoreinheit (S) einen Sensor aufweist, der in einem ersten Signalerfassungsmodus (SM1) und einem zweiten Signalerfassungsmodus (SM2) betreibbar ist, wobei das Endgerät (ED) eine Auswerteeinheit (C) umfasst, die dafür geeignet und dafür vorgesehen ist, die erfassten Signale auszuwerten und die Signalerfassung zu steuern.
wobei der erste Signalerfassungsmodus (SM1) vom zweiten Signalerfassungsmodus (SM2) verschieden ist, wobei
die Sensoreinheit (S) ein erstes Sensorelement (S1) aufweist und wobei der erste Signalerfassungsmodus (SM1) und der zweite Signalerfassungsmodus (SM2) getrennt ansteuerbar sind,
wobei die Mikroprozessoreinheit (C) dafür geeignet und dafür vorgesehen ist, die durch die Sensoreinheit erfassten Signale auszuwerten, wobei der zweite Sensormodus basierend auf den erfassten Signalen der ersten Signalerfassung (SM1) und/oder deren Analyse ereignisgesteuert startbar ist.

8. Waldbrandfrüherkennungssystem (10) nach Anspruch 7,
**dadurch gekennzeichnet, dass**
der erste Signalerfassungsmodus (SM1) periodisch wiederholbar und/oder der zweite Signalerfassungsmodus (SM2) aktivierbar ist.

9. Waldbrandfrüherkennungssystem (10) nach Anspruch 8,
**dadurch gekennzeichnet, dass**
das erste Sensorelement (S1) ein Gassensor ist.

10. Waldbrandfrüherkennungssystem (10) nach Anspruch 9,
**dadurch gekennzeichnet, dass**
das Messprinzip des ersten Sensorelements (S1) auf einer elektrischen Signalerfassung oder auf einer optischen Signalerfassung beruht.

11. Waldbrandfrüherkennungssystem (10) nach einem oder mehreren der Ansprüche 8 bis 10,
**dadurch gekennzeichnet, dass**
die Sensoreinheit (S) ein zweites Sensorelement (S2) aufweist.

12. Waldbrandfrüherkennungssystem (10) nach einem oder mehreren der Ansprüche 6 bis 11,
**dadurch gekennzeichnet, dass**
das Endgerät (ED) für die Off-Grid-Nutzung vorgesehen ist und eine autarke Stromversorgung aufweist, wobei
die autarke Stromversorgung (E) eine Energiekonversionsvorrichtung (EK) und/oder einen Energiespeicher (ES) aufweist.

13. Waldbrandfrüherkennungssystem (10) nach einem oder mehreren der Ansprüche 6 bis 12,
**dadurch gekennzeichnet, dass**
das Endgerät (ED) eine Kommunikationseinheit (K1) aufweist, die dafür geeignet ist, LPWAN-Mitteilungen zu versenden und zu empfangen.

## Claims

1. A method for the early detection of a forest fire using a terminal device (ED) with a sensor unit (S),
**characterized in that**
the sensor unit (S) performs a first signal acquisition in a first signal acquisition mode (SM1) and a second signal acquisition in a second signal acquisition mode (SM2) , wherein a message is sent from the end device (ED) to a first gateway (G1) if the data analyzed from the second signals detected in the second signal acquisition mode (SM2) analyzed by a microprocessor unit (C) exceed a second threshold value (SW2), and if the evaluation of the first signal acquisition and the second signal acquisition has detected a fire, and wherein
the message is generated in the sensor unit (S),
wherein the signals detected during the execution of the first signal acquisition (SM1) are analyzed using the microprocessor unit (C), and the execution of the second signal acquisition in the second signal acquisition mode (SM2) of the sensor unit (S) is started in an event-driven manner,
wherein the event that initiates the second signal acquisition in the second signal acquisition mode (SM2) is based on the signals acquired during the first signal acquisition (SM1) and/or their analysis.

2. Method for the early detection of a forest fire according to claim 1
**characterized in that**
the execution of the first signal acquisition in the first signal acquisition mode (SM1) of the sensor unit (S) is repeated at regular intervals.

3. Method for the early detection of a forest fire according to claim 1 or 2
**characterized in that**
the event that triggers the second signal acquisition in the second signal acquisition mode (SM2) is the exceeding of a threshold value (SW1) of the analyzed data from the signals detected in the first signal detection (SM1), wherein
the acquired second signals of the second signal acquisition (SM2) are evaluated.

4. Method for the early detection of a forest fire according to one or more of the preceding claims
**characterized in that**
the second signal acquisition mode (SM2) comprises a gas analysis.

5. Method for the early detection of a forest fire according to one or more of the preceding claims
**characterized in that**
the first signal acquisition mode (SM1) is based on a different physical principle than the second signal acquisition mode (SM2).

6. A method for the early detection of a forest fire according to claim 5,
**characterized in that**
the first signal acquisition mode (SM1) is based on optical smoke detection.

7. Forest fire early detection system (10) for carrying out a method according to one of the preceding claims, comprising a gateway (G1, G2), a microprocessor unit (C), and a terminal device (ED), wherein the terminal device (ED) comprises a sensor unit (S),
**characterized in that**
the sensor unit (S) comprises a sensor that is operable in a first signal acquisition mode (SM1) and a second signal acquisition mode (SM2) , wherein the terminal device (ED) comprises an evaluation unit (C) that is suitable and intended for evaluating the detected signals and controlling the signal detection.
wherein the first signal acquisition mode (SM1) differs from the second signal acquisition mode (SM2), wherein
the sensor unit (S) comprises a first sensor element (S1), and wherein the first signal acquisition mode (SM1) and the second signal acquisition mode (SM2) can be controlled separately,
wherein the microprocessor unit (C) is suitable and designed to evaluate the signals detected by the sensor unit, wherein the second sensor acquisition mode can be started in an event-driven manner based on the detected signals of the first signal acquisition (SM1) and/or their analysis.

8. Forest fire early detection system (10) according to claim 7,
**characterized in that**
the first signal acquisition mode (SM1) is periodically repeatable and/or the second signal acquisition mode (SM2) is activatable.

9. Forest fire early detection system (10) according to claim 8,
**characterized in that**
the first sensor element (S1) is a gas sensor.

10. Forest fire early detection system (10) according to claim 9,
**characterized in that**
the measuring principle of the first sensor element (S1) is based on electrical signal detection or on optical signal detection.

11. Forest fire early detection system (10) according to one or more of claims 8 to 10,
**characterized in that**
the sensor unit (S) comprises a second sensor element (S2).

12. Forest fire early detection system (10) according to one or more of claims 6 to 11,
**characterized in that**
the terminal device (ED) is intended for off-grid use and comprises a self-sufficient power supply, wherein
the self-sufficient power supply (E) comprises an energy conversion device (EK) and/or an energy storage device (ES).

13. Forest fire early detection system (10) according to one or more of claims 6 to 12,
**characterized in that**
the terminal device (ED) comprises a communication unit (K1) that is capable of sending and receiving LPWAN messages.

## Revendications

1. Procédé de détection précoce d'un incendie de forêt à l'aide d'un terminal (ED) comportant une unité de capteurs (S),
**caractérisé en ce que**
l'unité de capteurs (S) réalise une première acquisition de signal dans un premier mode d'acquisition de signal (SM1) et une seconde acquisition de signal dans un second mode d'acquisition de signal (SM2), dans lequel une notification est envoyée du terminal (ED) vers une première passerelle (G1) lorsque les données issues des seconds signaux (SM2) acquis dans le second mode d'acquisition de signal, analysées au moyen d'une unité microprocesseur (C), dépassent un second seuil (SW2), et lorsque l'évaluation de la première acquisition de signal et de la seconde acquisition de signal a détecté un incendie, et dans lequel
la notification est générée dans l'unité de capteurs (S),
dans lequel les signaux acquis lors de la réalisation de la première acquisition de signal (SM1) sont analysés à l'aide de l'unité microprocesseur (C) et la réalisation de la seconde acquisition de signal dans le second mode d'acquisition de signal (SM2) de l'unité de capteurs (S) est déclenchée de manière événementielle,
dans lequel l'événement déclenchant la seconde acquisition de signal dans le second mode d'acquisition de signal (SM2) repose sur les signaux acquis lors de la première acquisition de signal (SM1) et/ou sur leur analyse.

2. Procédé de détection précoce d'un incendie de forêt selon la revendication 1
**caractérisé en ce que**
la réalisation de la première acquisition de signal dans le premier mode d'acquisition de signal (SM1) de l'unité de capteurs (S) est répétée à intervalles de temps.

3. Procédé de détection précoce d'un incendie de forêt selon la revendication 1 ou 2
**caractérisé en ce que**
l'événement déclenchant la seconde acquisition de signal dans le second mode d'acquisition de signal (SM2) est le dépassement d'un seuil (SW1) des données analysées issues des signaux acquis lors de la première acquisition de signal (SM1), dans lequel les seconds signaux acquis de la seconde acquisition de signal (SM2) sont évalués.

4. Procédé de détection précoce d'un incendie de forêt selon l'une ou plusieurs des revendications précédentes
**caractérisé en ce que**
le second mode d'acquisition de signal (SM2) comprend une analyse de gaz.

5. Procédé de détection précoce d'un incendie de forêt selon l'une ou plusieurs des revendications précédentes
**caractérisé en ce que**
le premier mode d'acquisition de signal (SM1) repose sur un principe physique différent de celui du second mode d'acquisition de signal (SM2).

6. Procédé de détection précoce d'un incendie de forêt selon la revendication 5,
**caractérisé en ce que**
le premier mode d'acquisition de signal (SM1) repose sur une détection optique de la fumée.

7. Système de détection précoce d'incendies de forêt (10) destiné à la mise en œuvre d'un procédé selon l'une quelconque des revendications précédentes, comprenant une passerelle (G1, G2), une unité microprocesseur (C) et un terminal (ED), dans lequel le terminal (ED) présente une unité de capteurs (S),
**caractérisé en ce que**
l'unité de capteurs (S) présente un capteur pouvant être exploité dans un premier mode d'acquisition de signal (SM1) et dans un second mode d'acquisition de signal (SM2), dans lequel le terminal (ED) comprend une unité d'évaluation (C) apte et prévue pour analyser les signaux acquis et pour commander l'acquisition des signaux,
dans lequel le premier mode d'acquisition de signal (SM1) est différent du second mode d'acquisition de signal (SM2), dans lequel
l'unité de capteurs (S) présente un premier élément de capteur (S1), et dans lequel le premier mode d'acquisition de signal (SM1) et le second mode d'acquisition de signal (SM2) peuvent être commandés séparément,
dans lequel l'unité microprocesseur (C) est apte et prévue pour analyser les signaux acquis par l'unité de capteurs, dans lequel le second mode de capteur est démarrable de manière événementielle sur la base des signaux acquis de la première acquisition de signal (SM1) et/ou de leur analyse.

8. Système de détection précoce d'incendies de forêt (10) selon la revendication 7,
**caractérisé en ce que**
le premier mode d'acquisition de signal (SM1) est répétable de manière périodique et/ou le second mode d'acquisition de signal (SM2) est activable.

9. Système de détection précoce d'incendies de forêt (10) selon la revendication 8,
**caractérisé en ce que**
le premier élément de capteur (S1) est un capteur de gaz.

10. Système de détection précoce d'incendies de forêt (10) selon la revendication 9,
**caractérisé en ce que**
le principe de mesure du premier élément de capteur (S1) repose sur une acquisition de signal électrique ou sur une acquisition de signal optique.

11. Système de détection précoce d'incendies de forêt (10) selon l'une ou plusieurs des revendications 8 à 10,
**caractérisé en ce que**
l'unité de capteurs (S) comprend un second élément de capteur (S2).

12. Système de détection précoce d'incendies de forêt (10) selon l'une ou plusieurs des revendications 6 à 11,
**caractérisé en ce que**
le terminal (ED) est prévu pour une utilisation hors réseau (off-grid) et présente une alimentation électrique autonome, dans lequel
l'alimentation électrique autonome (E) présente un dispositif de conversion d'énergie (EK) et/ou un dispositif de stockage d'énergie (ES).

13. Système de détection précoce d'incendies de forêt (10) selon l'une ou plusieurs des revendications 6 à 12,
**caractérisé en ce que**
le terminal (ED) présente une unité de communication (K1) apte à envoyer et à recevoir des messages LPWAN.
